**Europäisches Patentamt**

**European Patent Office**

**Office européen des brevets**

(11) Veröffentlichungsnummer: **0 363 603 A2**

## (12) EUROPÄISCHE PATENTANMELDUNG

(21) Anmeldenummer: **89114971.8**

(22) Anmeldetag: **12.08.89**

(51) Int. Cl.5: **C08L 95/00**

(30) Priorität: **13.10.88 DE 3834950**

(43) Veröffentlichungstag der Anmeldung:
**18.04.90 Patentblatt 90/16**

(84) Benannte Vertragsstaaten:
**AT BE FR LU NL**

(71) Anmelder: **STRABAG BAU-AG**
**Siegburger Strasse 241**
**D-5000 Köln-Deutz 21(DE)**

(72) Erfinder: **Der Erfinder hat auf seine Nennung verzichtet**

(74) Vertreter: **Hennicke, Albrecht, Dipl.-Ing. et al**
**Patentanwälte Dipl.-Ing. Buschhoff Dipl.-Ing.**
**Hennicke Dipl.-Ing. Vollbach**
**Kaiser-Wilhelm-Ring 24 Postfach 190 408**
**D-5000 Köln 1(DE)**

(54) **Verfahren zum Herstellen von Asphalt oder anderen bituminösen Gemischen.**

(57) Verfahren zum Herstellen von Asphalt oder anderen bituminösen Gemischen, die körnige Zuschlagstoffe und Polymerbitumen als Bindemittel enthalten, bei dem das Polymer in fein verteilter Form mit Hilfe eines gasförmigen oder flüssigen Trägermediums dem heißen Bitumen zugesetzt wird. Dieses wird hierdurch aufgeschäumt, wobei sich auch eine kleine Polymermenge im Bitumenschaum gleichmäßig verteilt, der dann mit den Zuschlägen in Verbindung gebracht wird und sich an diesen besonders leicht anlagert, so daß mit geringem Energieaufwand eine gleichmäßige, polymermodifizierte Asphaltmischung hergestellt werden kann.

EP 0 363 603 A2

## Verfahren zum Herstellen von Asphalt oder anderen bituminösen Gemischen

Die Erfindung betrifft ein Verfahren zum Herstellen von Asphalt oder anderen bituminösen Gemischen, die körnige Zuschlagstoffe und Polymerbitumen als Bindemittel enthalten, die in heißem Zustand in einer Mischmaschine miteinander vermischt werden.

Bitumen, die als Bindemittel für Baustoffmassen hauptsächlich im Straßenbau verwendet werden, haben infolge der Vielfalt ihrer natürlichen Ausgangsstoffe eine oft sehr unterschiedliche Beschaffenheit. Um eine möglichst gleichmäßige Qualität, insbesondere Ermüdungsfestigkeit, Elastizität und Festigkeit zu erreichen, ist es üblich, dem Bitumen Polymere zuzusetzen, die im Bitumen, zum Beispiel durch Scherpumpen, fein verteilt werden. Da die Polymere jedoch wesentlich leichter sind als Bitumen, neigen polymermodifizierte Bitumen zu Entmischungen während des Transportes. Um solche Entmischungen zu vermeiden, werden dem polymermodifizierten Bitumen besondere Zusatzstoffe, wie aromatische und aliphatische Öle hinzugefügt. Eine andere Möglichkeit besteht darin, der Mischung reaktionsfreudige Zusatzstoffe beizufügen, um eine chemische Bindung zwischen Bitumen und Polymer herzustellen. Diese Zusatzstoffe und ihre Vermischung mit dem Bitumen-Polymergemisch sind jedoch teuer. Sie haben auch nur den Zweck, Entmischungen während des Transportes zu verhindern. Nach dem Herstellen und beim Einbau des bitumengebundenen Mineralgemisches haben sie keine Funktion mehr zu erfüllen, da nur die gleichmäßige Verteilung des Polymers im Bitumen die gewünschten gleichmäßigen Eigenschaften des Asphaltes gewährleistet.

Für die Herstellung von Asphalt und anderen bituminösen Gemischen können natürlich nicht nur in Raffinerien aufbereitete, polymermodifizierte Bitumen verwendet werden, sondern es ist auch möglich, beim Mischen von Mineralstoffen und Bitumen Polymere unmittelbar in den Mischer einzuführen, was bisher dadurch erfolgte, daß die Polymere in granulierter, pulverförmiger oder gelöster Form zudosiert und während einer längeren Mischzeit durch die Mischmaschine im Zuschlag-Bindemittelgemisch verteilt wurden. Da jedoch die zuzugebende Menge an Polymer bezogen auf die Gesamtmenge an Bindemittel und Zuschlagstoffen nur sehr klein ist und etwa in der Größenordnung von 2% der gesamten Bitumenmenge liegt, ist es auch bei längerer, intensiver Mischarbeit nur sehr schwer möglich, eine gleichmäßige Verteilung des Polymers im Mischgut zu erreichen. Um auch in schwerer zugänglichen Bereichen der Mischmaschine dem Mischgut eine Mindestmenge an Polymeren zuzumischen, war es deshalb erforderlich, die insgesamt zugegebene Menge an Polymer weit über das notwendige Maß hinaus zu erhöhen, was erhebliche Kosten verursacht, wodurch aber keineswegs gewährleistet ist, daß die gesamte Bitumenmenge mit dem Polymer modifiziert und in ihren Eigenschaften verbessert wird.

Aufgabe der Erfindung ist es, eine gute Verteilung nur der notwendigen, geringen Polymermenge im Bitumen und in der aus Bindemittel und Zuschlägen bestehenden Gesamtmischung mit geringem Aufwand zu erreichen.

Diese Aufgabe wird mit der Erfindung dadurch gelöst, daß das Polymer in fein verteilter Form mit Hilfe eines gasförmigen oder flüssigen Trägermediums dem heißen Bitumen zugesetzt und zusammen mit diesem in die Mischmaschine eingeführt wird, in der sich die Zuschlagstoffe befinden.

Durch dieses Verfahren wird es möglich, die zur Modifizierung des Bitumens erforderlichen Polymere am Einbauort selbst mit geringem Aufwand gleichmäßig zu verteilen und das so modifizierte Bitumen unmittelbar anschließend mit den Zuschlagstoffen so zu vermischen, daß sich eine homogene Mischung ergibt, in der die modifizierenden Polymere trotz ihrer sehr geringen Menge in der ganzen Masse gleichmäßig verteilt sind.

Das Polymer wird den gasförmigen oder flüssigen Trägermedien in flüssiger Form zugefügt. Besonders zweckmäßig ist es, wenn das Polymer mit dem flüssigen Trägermedium eine Emulsion, Suspension oder Dispersion bildet, die einem heißen Bitumenstrom zugesetzt wird, bevor oder während dieser in die Mischmaschine geleitet wird. Beim Zuführen der Polymer-Emulsion, -Suspension oder -Dispersion zu dem heißen Bitumen verdampft das flüssige Trägermedium im Bitumen, das hierdurch aufgeschäumt wird, wobei sich das Polymer im Bitumenschaum sehr fein verteilt. Der so entstandene, in die Mischmaschine eingeführte, polymermodifizierte Bitumenschaum lagert sich besonders leicht und in guter Verteilung an den körnigen Zuschlagstoffen im Mischer an und es ergibt sich schon bei verhältnismäßig geringer Mischarbeit eine sehr homogene bituminöse Mischung, die leicht eingebaut werden kann.

Mit diesem Verfahren nach der Erfindung können auch kleine Mengen von Asphalt gleichbleibender Qualität wirtschaftlich hergestellt werden. Solche kleinen Mengen werden oft für Reparaturzwecke oder zum Herstellen eines farbigen Asphaltes für Wegemarkierungen oder dergleichen benötigt.

Da das Trägermedium beim Verdampfen im heißen Bitumenstrom sein Volumen bedeutend vergrößert, wird auch das im Trägermedium vorhandene Polymer über einen sehr großen Raum verteilt, der ebenso groß sein kann, wie das Volumen des Bitumens, das in die Mischmaschine eingeführt wird. Hierdurch wird leicht eine vollständige und gleichmäßige Verteilung der prozentual geringen Polymermengen im Bitumen erreicht und die gewünschte Modifizierung der gesamten Bitumenmenge gewährleistet.

Da das Polymer dem Bitumen schon zugegeben wird, bevor es in die Mischmaschine eingebracht wird und mit den Zuschlagstoffen in Berührung kommt, genügt es, das Bitumen auf eine Temperatur zu erhitzen, die nur geringfügig über der Verdampfungstemperatur des flüssigen Trägermediums liegt. Das Bitumen wird hierdurch geschont und zur Erwärmung des Bindemittels ist nur ein verhältnismäßig geringer Energieaufwand vonnöten. Da das bituminöse Bindemittel in Form eines Bitumenschaums mit den körnigen Zuschlagstoffen zusammengebracht wird, hat der auf diese Weise hergestellte Asphalt beim unmittelbar anschließenden Einbau, zum Beispiel als Tragschicht oder Deckschicht eines Verkehrsweges, einen verhältnismäßig geringen Verdichtungswiderstand.

Es ist zweckmäßig, den Bitumenstrom mit dem in diesem fein verteilten Polymer durch Düsen in die Mischmaschine einzuführen, also auf die körnigen Zuschlagstoffe aufzusprühen. Das Polymer kann in flüssigem Zustand auch mit einem gasförmigen Trägermedium vermischt als Nebel in einen Bitumenstrom eingeblasen oder von diesem angesaugt werden, beispielsweise wenn zum Einspritzen des Bitumens in die Mischmaschine eine Düse verwendet wird, welche das gasförmige Trägermedium mit dem Polymer ansaugt, das sich beim Austritt des Bitumens in die Mischmaschine mit dem Bitumen vermischt.

Als Trägermedium kann Luft, Stickstoff oder auch Wasserdampf verwendet werden, mit dem dann das Bitumen beim Eintritt in die Mischmaschine aufgeblasen oder aufgeschäumt wird.

Obgleich bei dem erfindungsgemäßen Verfahren bevorzugt flüssiges Polymer verwendet wird, ist es auch möglich, das Polymer als sehr fein verteilten Feststoff, beispielsweise in Form eines Polymerstaubes mit einem gasförmigen Trägermedium dem Bitumen zuzugeben. Um eine vollständige Verteilung im Bitumenstrom zu erreichen, sind dann jedoch spezielle Einspritzdüsen an der Mischmaschine erforderlich, mit denen der Bitumenstrom durch das gasförmige Trägermedium in einen Bitumennebel verwandelt werden kann.

## Ansprüche

1. Verfahren zum Herstellen von Asphalt oder anderen bituminösen Gemischen, die körnige Zuschlagstoffe und Polymerbitumen als Bindemittel enthalten, die in heißem Zustand in einer Mischmaschine miteinander vermischt werden, **dadurch gekennzeichnet, daß** das Polymer in fein verteilter Form mit Hilfe eines gasförmigen oder flüssigen Trägermediums dem heißen Bitumen zugesetzt und zusammen mit diesem in die Mischmaschine eingeführt wird, in der sich die Zuschlagstoffe befinden.

2. Verfahren nach Anspruch 1, **dadurch gekennzeichnet, daß** das Polymer mit dem flüssigen Trägermedium eine Emulsion, Suspension oder Dispersion bildet, die einem heißen Bitumenstrom zugesetzt wird, bevor oder während dieser in die Mischmaschine geleitet wird.

3. Verfahren nach Anspruch 1 oder 2, **dadurch gekennzeichnet, daß** der Bitumenstrom mit dem in diesem fein verteilten Polymer durch Düsen in die Mischmaschine eingeführt wird.

4. Verfahren nach einem der Ansprüche 1 bis 3, **dadurch gekennzeichnet, daß** das Polymer in flüssigem Zustand mit einem gasförmigen Trägermedium vermischt als Nebel in einen Bitumenstrom eingeblasen oder von diesem angesaugt wird.

5. Verfahren nach einem der Ansprüche 1 bis 4, **dadurch gekennzeichnet, daß** als Trägermedium Luft verwendet wird.

6. Verfahren nach einem der Ansprüche 1 bis 5, **dadurch gekennzeichnet, daß** als Trägermedium Stickstoff verwendet wird.

7. Verfahren nach einem der Ansprüche 1 bis 6, **dadurch gekennzeichnet, daß** als Trägermedium Wasserdampf verwendet wird.

8. Verfahren nach einem der Ansprüche 1 bis 7, **dadurch gekennzeichnet, daß** das in die Mischmaschine eingebrachte Bitumen einerseits und das Trägermedium mit dem Polymer in gasförmigem Zustand andererseits etwa gleichgroße Volumina einnehmen.

9. Verfahren nach einem der Ansprüche 1 bis 8, **dadurch gekennzeichnet, daß** das Bitumen beim Einführen in die Mischmaschine eine Temperatur aufweist, die nur geringfügig über der Siedetemperatur des flüssigen Trägermediums liegt.